# EUROPÄISCHE PATENTSCHRIFT

(11) **EP 4 036 442 B1**
(45) Veröffentlichungstag und Bekanntmachung des Hinweises auf die Patenterteilung: **29.05.2024**
(21) Anmeldenummer: 22153637.8
(22) Anmeldetag: 27.01.2022
(51) Int. Cl.: F16H 25/12, F16H 25/24, B22C 9/00, B29C 45/00

(54) **SPINDEL MIT RADIALEN AUSNEHMUNGEN, GUSSFORM UND VERFAHREN ZUR HERSTELLUNG DIESER**
SPINDLE WITH RADIAL RECESSES, MOULD AND METHOD OF MANUFACTURING THE SAME
BROCHE POURVUE D'ÉVIDEMENTS RADIAUX, MOULE ET PROCÉDÉ DE FABRICATION DE CELLE-CI

(30) Priorität: 29.01.2021 DE 102021102090
(43) Veröffentlichungstag der Anmeldung: 03.08.2022
(73) Patentinhaber: Rahrbach GmbH, 42579 Heiligenhaus (DE)
(72) Erfinder: Pietrasch, Rinaldo, 42551 Velbert (DE)
(74) Vertreter: Feder Walter Ebert

(56) Entgegenhaltungen:
- DE-A1- 19 911 432
- DE-A1-102017 209 974
- US-A- 3 779 094

## Beschreibung

Die vorliegende Erfindung betrifft eine Spindel, insbesondere für einen Spindelantrieb, mit einer durchgängigen Gewinderippe mit einer ersten Lauffläche und einer zweiten Lauffläche. Weitere Gegenstände der Erfindung bilden ein Spindelantrieb, insbesondere zur Betätigung eines Schließmechanismus, mit einem axial beweglichen Läufer und einer Spindel zum Antrieb des Läufers, sowie eine Gussform zur Herstellung einer Spindel und ein Verfahren zur Herstellung einer Spindel mit einer solchen Gussform.

Die Erfindung findet Einsatz bei der Bewegung von Bauteilen und insbesondere bei Spindelantrieben. Eine Spindel weist dabei eine durchgängige Gewinderippe auf. Diese Gewinderippe windet sich um die Längsachse der Spindel und weist dabei zwei diametrale Laufflächen auf, welche in einem Winkel quer zur Längsachse stehen. Da sich die Gewinderippe jedoch um die Längsachse der Spindel windet, wendet sich die erste Lauffläche dennoch der zweiten Lauffläche der direkt folgenden Windung der Gewinderippe zu. Mit den beiden einander zugewandten Laufflächen begrenzt die Gewinderippe auf diese Weise einen helixartigen Gewindegang der Spindel.

Ein ähnlich ausgestalteter Gewindekörper zum Einschrauben in ein Gewinde oder eine Feder wird in der DE 10 2017 209 974 A1 beschrieben. Dieser weist einen zylindrischen Körper, der in einem Gussverfahren hergestellt wurde, und einen nach außen gerichteten Gewindegang in Längsrichtung des zylindrischen Körpers auf. Der Gewindegang weist mindestens eine Ausnehmung auf. Das Gussmaterial des Gewindekörpers umfasst Gusseisen mit Kugelgraphit.

Ähnlich einer archimedischen Schraube kann eine Rotationsbewegung der Spindel in eine Bewegung eines zu bewegenden Bauteils gewandelt werden, welches zumindest an einer der Laufflächen anliegt. Durch die Rotationsbewegung der Spindel wird die Lauffläche dabei unter das zu bewegende Bauteil geschoben, drückt dieses weg und bewirkt so einen Vorschub des zu bewegenden Bauteils. Abhängig von der Rotationsrichtung übt nur eine der Laufflächen einen Druck auf das zu bewegende Bauteil aus, so dass die Richtung des Vorschubs über die Rotationsrichtung der Spindeln verändert werden kann.

Insbesondere bei einem Läufer, welcher nur entlang einer Achse bewegbar ist, bewirkt die Rotationsbewegung der Spindel so eine Axialbewegung des Läufers. Die Spindel kann daher zur Konvertierung einer Rotations- in eine Axialbewegung genutzt werden. Eine solche Konvertierung ist beispielsweise bei der Betätigung von Schließmechanismen hilfreich, bei welchen die Verriegelung und Entriegelung als lineare Bewegung entlang eine Achse erfolgt, so dass ein entsprechender Spindelantrieb mit einer Spindel und einem Läufer zur Betätigung von Schließmechanismen eingesetzt werden können.

Die Fertigung solcher Spindeln ist jedoch sehr aufwendig.

Zwar ist das Gießen einer Spindel mittels einer Form möglich. Um die Spindel jedoch zu entformen, muss diese aus der Gussform aufwendig herausgeschraubt werden. Dies erfordert wiederum, dass die Spindel komplett ausgehärtet ist. Ansonsten könnten die beim Herausschrauben auf die Spindel ausgeübten Kräfte zu einer Deformation oder sogar zu einem unbeabsichtigten Abdrehen von Teilen der Spindel führen. Denn das nicht vollständig ausgehärtete Material weist eine verminderte Belastbarkeit auf. Solange die Spindel nicht vollständig ausgehärtet ist, wird die Gussform daher belegt und steht für die Fertigung weiterer Spindeln nicht zu Verfügung. Die Spindelfertigung in einem Gussverfahren ist somit zeitaufwendig und erfordert eine Vielzahl von Gussformen, welche während des Aushärtens lange belegt sind.

Zudem kann auf diese Weise nur eine Spindel gefertigt werden, deren Gewinderippe entlang der gesamten Längsachse der Spindel eine gleichbleibende Form und Steigung aufweist, da die Spindel ansonsten nicht herausgedreht werden kann, sondern sich beim Herausdrehen in der Gussform verklemmen würde. Eine in einem solchen Gussverfahren herstellbare Spindel darf daher insbesondere keinen abweichenden axialen Anfangs- oder Endbereich aufweisen.

Die Verwendung einer mehrstückigen Gussform, bei welcher einzelne Formstücke der Gussform zum Entformen der Spindel linear von dieser wegbewegt werden, ist nicht möglich. Denn die Gewinderippe erzeugt Hinterschnitte, bei welchen Bereiche zumindest einer Lauffläche entlang einer Richtung durch die übrige Gewinderippe verdeckt werden. Entlang dieser Richtung hintergreift die gegossene Spindel die Gussform nach dem Gießen. Da sich die Gewinderippe mehrmals um die Längsachse windet, gibt es keine Richtung, entlang welcher keine Hinterschnitte auftreten. Daher ist es nicht möglich, einzelne Formstücke der Gussform zur Trennung der Spindel von der Gussform linear zu verfahren, ohne dass die Spindel dabei zerstört wird.

Zur Fertigung einer Spindel muss diese daher aus dem Vollen gefräst oder gedreht werden. Dies ist zeit- und arbeitsaufwendig und folglich mit relativ hohen Stückkosten verbunden. Zudem sind derartig hergestellte Spindeln auf Materialen beschränkt, welche spanend bearbeitet werden können.

Die **Aufgabe** der vorliegenden Erfindung liegt daher darin, eine Spindel anzugeben, welche auf einfache und zeitsparende Weise herstellbar ist.

Diese Aufgabe wird bei einer Spindel der eingangs genannten Art durch die Merkmale des Anspruchs 1 **gelöst**.

Die Ausnehmungen unterbrechen die mindestens eine Lauffläche, nicht aber die ganze Gewinderippe. Sie ermöglichen es, die Spindel in einer Gussform anzuordnen, ohne dass in einer radialen Richtung Hinterschnitte auftreten. Daher kann die Spindel mit einem Gussverfahren hergestellt werden, bei welchem einzelne Formstücke der Gussform zum Entformen linear verfahren werden, ohne dass die Spindel dabei zerstört wird. Die einzelnen Flächensegmente der Lauffläche können weiterhin mit einem zu bewegenden Bauteil zusammenwirken, so dass die Funktionalität der Spindel nicht beeinträchtigt wird. Die Spindel mit entlang des Radius verlaufenden Ausnehmungen der Lauffläche ist auf einfache und zeitsparende Weise herstellbar.

Die Spindel kann ohne Nachbearbeitung, insbesondere ohne Nachbearbeitung der Oberfläche der Gewinderippe, in einem Spindelantrieb zum Einsatz kommen. Ohne aufwendige Nachbearbeitung kann die Spindel einsetzbar sein.

Die Ausnehmungen können so ausgebildet sein, dass diese einen eingreifenden Körper eines mittels der Spindel zu bewegenden Bauteils nicht blockieren. Ein Stoppen und/oder Ratterbewegungen während der Bewegung durch einen Kontaktverlust des zu bewegenden Bauteils mit einer der Laufflächen können vermieden werden.

In einer vorteilhaften Ausgestaltung sind die Ausnehmungen in einem gleichmäßigen Abstand zueinander entlang der Lauffläche angeordnet. Durch die Anordnung der Ausnehmungen mit einem gleichmäßigen Abstand zueinander kann eine regelmäßige Unterteilung der Lauffläche in gleichgroße Flächensegmente erzielt werden. Entlang der um die Längsachse der Spindel gewunden verlaufenden Lauffläche kann eine regelmäßige Abfolge von Ausnehmungen und Flächensegmenten erzielt werden, welche sich positiv auf die Laufruhe eines mittels der Spindel zu bewegenden Bauteils auswirken kann.

Die Ausnehmungen einer Lauffläche können im Wesentlichen das gleiche Profil entlang einer Umfangsrichtung aufweisen. Insbesondere können die Ausnehmungen einer Lauffläche einander gleichen.

Gemäß einer konstruktiven Ausgestaltung wird vorgeschlagen, dass die Ausnehmungen kreissektorförmig sind. Kreissektorförmige Ausnehmungen können auf einfache Weise Hinterschnitte verhindern, ohne dass dabei zu viel einer Lauffläche eingebüßt wird.

Bei einer vorteilhaften Ausgestaltung der Erfindung sind die Ausnehmungen der ersten Lauffläche gegenläufig zu den Ausnehmungen der zweiten Lauffläche ausgerichtet. Das jeweilige Profil der Ausnehmungen der ersten Lauffläche entlang einer Umfangsrichtung kann auf diese Weise dem jeweiligen Profil der Ausnehmungen der zweiten Lauffläche entlang einer entgegengesetzten Umfangsrichtung entsprechen. Auf diese Weise kann die Spindel um eine quer zur Längsachse verlaufenden Achse rotationssymmetrisch ausgebildet sein. Da jede Lauffläche eine eigene Schubrichtung aufweisen kann, entlang welcher sie ein zu bewegendes Bauteil durch Druckausübung im Gewindegang bewegen kann, und diese Schubrichtung der ersten Lauffläche und der zweiten Lauffläche einander entgegengesetzt sind, kann die Gegenläufigkeit der Ausnehmungen der ersten Lauffläche zu den Ausnehmungen der zweiten Lauffläche eine gleichartige Bewegung des zu bewegenden Bauteils sowohl bei einer Bewegung durch die erste Lauffläche als auch bei einer Bewegung durch die zweite Lauffläche gestatten.

Eine weitere Ausgestaltung sieht vor, dass die Ausnehmungen je eine Aufnahmerichtung zur hinterschnittsfreien Aufnahme eines in Radialrichtung der Spindel beweglichen Formstücks aufweisen. Die Ausnehmungen können das zu einem Bereich der Spindel komplementär geformtes Formstück entlang ihrer Aufnahmerichtung aufnehmen, so dass das Formstück flächig an diesem Bereich der Spindel anliegt und ohne dass es zu einer Beschädigung der Spindel durch das Formstück kommt. Ein zum Gießen genutztes Formstück kann zudem entgegen der Aufnahmerichtung von der Spindel wegbewegt werden, ohne dass es zu einer Beschädigung der Spindel kommt, da entlang der Aufnahmerichtung keine Hinterschnitte auftreten. Entlang anderer Richtungen als der Aufnahmerichtung kann die Ausnehmung gleichwohl Hinterschnitte aufweisen.

In diesem Zusammenhang hat es sich als vorteilhaft erwiesen, wenn einer ersten Ausnehmung der ersten Lauffläche mindestens eine zweite Ausnehmung der zweiten Lauffläche zugeordnet ist, deren Aufnahmerichtung parallel zur Aufnahmerichtung der ersten Ausnehmung verläuft. Durch die parallelen Aufnahmerichtungen kann ein Formstück zwischen der ersten Ausnehmung der ersten Lauffläche und der zweiten Ausnehmung der zweiten Lauffläche hinterschnittsfrei angeordnet werden. Ein zwischen den beiden aneinander zugeordneten Ausnehmungen angeordnetes Formstück kann ohne Beschädigung der Spindel entlang der parallelen Aufnahmerichtungen von der Spindel wegbewegt werden. Ein Entformen der Spindel nach dem Gießen beider Laufflächen kann auf einfache Weise erzielt werden.

Ferner kann es vorteilhaft sein, wenn die erste Ausnehmung und die mindestens eine ihr zugeordnete zweite Ausnehmung in Umfangsrichtung der Spindel zueinander, insbesondere um im Wesentlichen 90°, winkelversetzt sind. Der Winkelversatz zwischen der ersten Ausnehmung und der ihr zugeordneten zweiten Ausnehmung kann zwischen strukturell gleichen Kanten der jeweiligen Ausnehmung bestehen. Ein Winkelversatz von 90° kann eine umfängliche Unterteilung der Spindel in vier gleichgroße Sektoren ermöglichen, wobei sich ein einzelner Sektor zwischen der ersten Ausnehmung und der ihr zugeordneten zweiten Ausnehmung in Umfangsrichtung der Spindel erstrecken kann.

Ferner kann es vorgesehen sein, dass die Ausnehmungen der ersten Lauffläche und/oder die Ausnehmungen der zweiten Lauffläche in Umfangsrichtung der Spindel um im Wesentlichen 90° entlang der ersten Lauffläche bzw. der zweiten Lauffläche winkelversetzt zueinander sind. Durch diesen Winkelversatz der Ausnehmungen einer Lauffläche kann eine vielzählige Rotationssymmetrie um die Längsachse der Spindel erzielt werden.

Erfindungsgemäß sind die Ausnehmungen stufenförmig mit einer Stufenkante und einer Stufenfläche. Durch stufenförmige Ausnehmungen können Hinterschnitte entlang einer Richtung auf einfache Art und Weise vermieden werden. Die Stufenfläche kann dabei tiefer als ein sich in Umfangsrichtung an die Stufenkante schließendes Flächensegment liegen.

In vorteilhafter Weise verläuft die Aufnahmerichtung entlang der Stufenkante. Durch eine entlang der Stufenkante verlaufende Aufnahmerichtung können Hinterschnitte entlang der Aufnahmerichtung auf einfache Weise verhindert werden. Denn durch das Ersetzen eines Bereichs der Lauffläche durch eine Stufenfläche kann verhindert werden, dass dieser Bereich der Lauffläche durch die übrige Gewinderippe parallel zur Stufenkante verdeckt wird.

Gemäß einem Ausführungsbeispiel der Erfindung verlaufen die Stufenkanten jeweils sekantenartig. Eine sekantenartig verlaufende Stufenkante schneidet weder selbst noch in ihrer Verlängerung die durch den Spindelmittelpunkt verlaufende Längsachse der Spindel. Durch diese sekantenartig verlaufende Stufenkante kann die Ausnehmung kreissektorfömig ausgebildet sein, ohne einen gesamten Kreissektor der Spindel darzustellen. Die Stufenkanten der einander zugeordneten Ausnehmungen der ersten Lauffläche und der zweiten Lauffläche können derart sekantenartig verlaufen, dass diese in ihrer Verlängerung die Längsachse der Spindel auf gegenüberliegenden Seiten passieren. Auf diese Weise können die Aufnahmerichtungen der ersten Ausnehmung und der ihr zugeordneten zweiten Ausnehmung parallel zueinander verlaufen und eine entlang einer Radialrichtung der Spindel hinterschnittsfrei erfolgende Bewegung eines Formstücks ermöglichen.

Eine weitere Ausgestaltung sieht vor, dass die Stufenflächen eine geringere Steigung als die Flächensegmente aufweisen. Durch die geringere Steigung der Stufenflächen können Hinterschnitte entlang der Aufnahmerichtung in der Ausnehmung verhindert werden.

In einer weiteren Ausführungsform der Erfindung hinterschneiden die Ausnehmungen die Lauffläche entlang einer umfänglichen Schubrichtung der Lauffläche, insbesondere radial innenliegend. Entlang der Schubrichtung ergeben sich Hinterschnitte, welche entlang der Aufnahmerichtung nicht vorliegen. Die Hinterschneidung entlang der Schubrichtung kann die Ausgestaltung der Stufenfläche mit einer geringeren Steigung als bei den Flächensegmenten auf einfache Weise ermöglichen.

Bei einer vorteilhaften Ausgestaltung verjüngt sich die Gewinderippe entlang des Radius der Spindel nach außen hin. Die diametralen Laufflächen der Gewinderippe können sich auf diese Weise nach radial außen hin einander annähern. Die Laufflächen können nach radial innen, insbesondere in Richtung eines Kerns der Spule, ansteigen. Der Gewindegang kann auf diese Weise radial innenliegend eine geringere axiale Abmessung als radial außenliegend aufweisen. Die Aufnahme eines mittels der Spindel zu bewegenden Bauteils kann aufgrund dieser Form des Gewindegangs vereinfacht werden.

Besonders vorteilhaft ist es, wenn die Flächensegmente radial innenliegend eine größere Steigung aufweisen als radial außenliegend. Durch die unterschiedlichen Steigungen können die Flächensegmente zur Erzeugung eines besseren Vorschubs an die Form eines zu bewegenden und in den Gewindegang eingreifenden Bauteils angepasst sein.

Gemäß einer weiteren Ausführungsform der Erfindung weist die Spindel an einem axialen Ende eine Koppelstelle, insbesondere einen Steckverbinder, ein Zahnrad und/oder ein Ritzel, zur Ankopplung eines Antriebselements auf. Über die Koppelstelle kann ein zum Antrieb der Spindel dienendes Antriebselement, wie beispielsweise ein Motor, auf einfache Weise an die Spindel angekoppelt werden. Über die Koppelstelle kann ein Drehmoment von dem Antriebselement unmittelbar auf die Spindel übertragen werden. Insbesondere ein Steckverbinder, an welchen das Antriebselement angesteckt werden kann, ein Zahnrad und/oder ein Ritzel können eine effektive Kraftübertragung und/oder Drehmomentübertragung zum Antrieb der Spindel ermöglichen. Alternativ kann zwischen dem Antriebselement ein Getriebe vorgesehen sein, welches an die Koppelstelle ankoppeln kann, so dass die Koppelstelle das Antriebselement mittelbar mit der Spindel verbindet.

In einer konstruktiven Ausgestaltung wird vorgeschlagen, dass die Spindel spritzgegossen oder druckgegossen ist, insbesondere aus Kunststoff, Zink, Magnesium, Aluminium oder Stahl, insbesondere einstückig. Eine spritzgegossene oder druckgegossene Spindel kann auf besonders kostengünstige und einfache Weise hergestellt werden. Insbesondere Kunststoff, Zink, Magnesium, Aluminium oder Stahl haben sich als für einen Spritzguss oder Druckguss der Spindel vorteilhafte Materialien erwiesen, da sich diese durch ihre Kostengünstigkeit, mechanische Belastbarkeit und/oder ihr vorteilhaftes Gewicht auszeichnen. Insbesondere eine als einstückiges Spritzgussteil oder einstückiges Druckgussteil gefertigte Spindel kann besonders zeitsparend hergestellt werden, da einzelne Bestandteile der Spindel nicht nachträglich zusammengefügt werden müssen, sondern die Spindel gänzlich durch einen einzigen Gussprozess gefertigt werden kann.

Bei einem Spindelantrieb der eingangs beschriebenen Art wird zur Lösung der vorstehenden Aufgabe vorgeschlagen, dass die Spindel in der zuvor beschriebenen Weise ausgebildet ist, wodurch sich die im Zusammenhang mit der Spindel beschriebenen Vorteile ergeben.

In Weiterbildung der Erfindung ist der Läufer eine die Spindel radial umgreifende Nuss oder ein parallel zur Längsachse der Spindel angeordneter Schlitten. Eine Nuss kann auf einfache Weise die Spindel vollumfassen, wodurch die Stabilität des Spindelantriebs verbessert wird. Die Nuss kann durch ihr radiales Umgreifen der Spindel an einer Achse festgelegt werden.

Ein parallel zur Längsachse der Spindel angeordneter Schlitten kann ein im Zusammenbau einfachen Aufbau des Spindelantriebs ermöglichen. Der Schlitten kann auf einfachere Weise als die Nuss ersetzt werden.

Gemäß einem Ausführungsbeispiel der Erfindung weist die Nuss einen helixartigen, insbesondere ausnehmungslosen, Kanal zur Aufnahme eines Teilabschnitts der Gewinderippe der Spindel auf. Der helixartige Kanal der Nuss kann eine große Kontaktfläche zwischen der Nuss und der Gewinderippe bereitstellen. Durch eine große Kontaktfläche zwischen der Nuss und der Gewinderippe kann eine besonders zuverlässige und stabile axiale Bewegung der Nuss erzielt werden.

Gemäß einer weiteren konstruktiven Ausgestaltung wird vorgeschlagen, dass der Schlitten ein zwischen die Laufflächen eingreifendes, insbesondere in Schubrichtung der Lauffläche größer als die Ausnehmungen dimensioniertes, Eingreifelement aufweist. Das zwischen die Laufflächen eingreifende Eingreifelement kann als einziger Bestandteil des Läufers mit der Spindel in Kontakt stehen. Die übrigen Bestandteile des Schlittens können außerhalb der Spindel angeordnet sein. Ein in Schubrichtung der Lauffläche größer als die Ausnehmungen dimensioniertes Eingreifelement kann dabei größer als die maximale Ausdehnung der Ausnehmungen in Schubrichtung sein. Durch die größere Dimensionierung des Eingreifelements kann eine höhere Laufruhe erzielt werden, da sich das über die Ausnehmungen bewegende Eingreifelement aufgrund seiner Dimensionierung über die Ausnehmung hinaus erstreckt und auf zwei benachbarten Flächensegmenten der Lauffläche aufliegen kann. Ein Eintritt des Eingreifelements in die Ausnehmung und insbesondere ein Kontakt mit der Stufenfläche der Ausnehmung kann auf einfache Weise vermieden werden.

Das Eingreifelement kann als ein vorsprungartiges Eingreifelement oder als ein rollenartiges Eingreifelement ausgestaltet sein. Ein vorsprungartiges Eingreifelement kann starr mit den übrigen Bestandteilen des Schlittens verbunden sein. Das vorsprungartige Eingreifelement kann entlang der Laufflächen gleiten. Ein rollenartiges Eingreifelement kann ein drehbeweglich, insbesondere frei drehbeweglich, gelagertes Rollenelement aufweisen. Das rollenartige Eingreifelement kann mit dem Rollenelement über die Laufflächen rollen. Durch das Rollenelement kann die Reibung zwischen dem Eingreifelement und der Spindel reduziert werden. Die Energieeffizienz des Spindelantriebs kann durch ein rollenartiges Eingreifelement gesteigert werden.

Bei einer Gussform der eingangs genannten Art wird zur Lösung der vorstehend genannten Aufgabe vorgeschlagen, dass mehrere Formstücke eine Kavität zur Aufnahme einer Gussmasse bilden, wobei die Kavität der Form der Spindel inklusive der Ausnehmungen entspricht.

Die mehrstückige Gussform ermöglicht es, die Spindel mit einem Gussverfahren herzustellen, bei welchem die einzelnen Formstücke zum Entformen der Spindel linear verfahren werden, ohne dass die Spindel dabei beschädigt oder zerstört wird. Im zusammengesetzten Zustand der Gussform, in welchem die Formstücke aneinander angrenzen, umschließen die Formstücke die Kavität, d. h. einen zusammenhängenden Hohlraum zur Aufnahme der Gussmasse, aus welcher die Spindel gegossen wird. Da die Kavität der Form der Spindel inklusive der Ausnehmungen entspricht, dient die Gussform auch der Ausformung der Ausnehmungen, so dass zumindest in einer radialen Richtung keine Hinterschnitte der Spindel beim Gießen ausgebildet werden.

Die im zusammengesetzten Zustand der Gussform nach gussforminnen gerichtete Seite des Formstücks kann eine Teilkavität aufweisen, bei welcher es sich um eine ausnehmungsartige Profilierung der Oberfläche des Formstücks handelt, die einen Teil der Begrenzung der Kavität der gesamten Gussform bildet. Bevorzugt können die Teilkavitäten mehrerer Formstücke jeweils zur Ausformung mindestens einer Ausnehmung mindestens einer Lauffläche der Spindel ausgelegt sein. Indem jedes dieser Formstücke mindestens eine Ausnehmung ausformt, kann jedes dieser Formstücke hinterschnittsfrei zum Entformen der Spindel entlang mindestens einer radialen Richtung von der Spindel wegbewegbar sein.

Ferner kann es vorteilhaft sein, wenn die Gussform, insbesondere mindestens vier, radiale Formstücke zur Formung der Spindel mit der Gewinderippe und den Ausnehmungen aufweist. Die radialen Formstücke können die umfängliche Kontur der Spindel inklusive der Gewinderippe und den Ausnehmungen auf einfache Weise formen. Zum Entformen der gegossenen Spindel können die radialen Formstücke entlang einer radialen Richtung von der gegossenen Spule wegbewegt werden. Jede dieser radialen Formstücke kann zur Ausformung mindestens einer Ausnehmung ausgeformt sein, so dass jedes radiale Formstück entlang einer radialen Richtung hinterschnittsfrei von der Spindel verfahren werden können.

Gemäß einer konstruktiven Ausgestaltung wird vorgeschlagen, dass ein radiales Formstück derart ausgestaltet ist, dass es zur Formung des umfänglichen Bereichs der Spindel zwischen einer ersten Ausnehmung der ersten Lauffläche und einer ihr zugeordneten zweiten Ausnehmung der zweiten Lauffläche dient. Ein die erste Ausnehmung und die ihr zugeordnete zweite Ausnehmung formendes Formstück kann auf einfache Weise entgegen der zueinander parallel verlaufenden Aufnahmerichtungen der ersten und der zweiten Ausnehmung zum Entformen linear von der Spule wegbewegt werden. Das Formstück kann die erste Ausnehmung der ersten Lauffläche und die ihr zugeordnete zweite Ausnehmung der zweiten Lauffläche gemeinsam formen.

In einer konstruktiv vorteilhaften Ausgestaltung bilden die radialen Formstücke gleichgroße umfängliche Sektoren der Kavität. Durch die gleichgroße umfängliche Sektoren der Kavität bildenden radialen Formstücke kann eine im Wesentlichen symmetrische Gussform bereitgestellt werden. Mit einer symmetrischen Gussform können die beim Zusammenfügen der Formstücke ausgeübten Kräfte gleichmäßig über die gesamte Gussform verteilt werden.

In einer weiteren Ausführungsform der Erfindung weist die Gussform mindestens ein axiales Formstück zur Formung einer Koppelstelle auf. Mit einem axialen Formstück kann die Koppelstelle auf einfache Weise geformt werden. Das axiale Formstück kann die Kavität entlang einer axialen Richtung, welche der späteren Längsachse der auszuformenden Spule entspricht, begrenzen.

Bei einem Verfahren der eingangs genannten Art wird zur Lösung der vorstehend genannten Aufgabe vorgeschlagen, dass eine Gussmasse in die geschlossene Gussform, insbesondere unter Druck, Schwerkraft oder Schwerkraft mit anschließendem Druck, eingefüllt wird und die Spindel inklusive Ausnehmungen nach dem Erhärten der Gussmasse entformt wird.

Aufgrund der Ausnehmungen der herzustellenden Spindel sowie der zur Formung dieser Ausnehmungen ausgestalteten Gussform kann das Entformen der die Spindel bildenden Gussmasse hinterschnittsfrei und ohne Beschädigung der Gussmasse erfolgen. Die erhärtete Gussmasse kann dabei vollständig ausgehärtet sein oder lediglich in der Gussform zugewandten Außenbereich erhärtet sein, während die Gussmasse im Inneren der Spindel noch nicht vollständig ausgehärtet ist. Das Entformen kann auf diese Weise zeitnah nach dem Gießen erfolgen. Die Gussform kann zur Fertigung einer weiteren Spindel zeitnah wieder zur Verfügung steht, ohne dass abgewartet werden muss, bis die Gussmasse der bereits gegossenen Spindel in der Gussform vollständig aushärtet ist. Das Verfahren zur Herstellung kann nach Art eines Spritzgussverfahrens, bei welchem die Gussmasse unter Druck in die Gussform eingefüllt wird, nach Art eines Feingussverfahrens, bei welchem die Gussmasse durch Auswirkung der Schwerkraft in die Gussform eingefüllt wird, oder als Hybridverfahren, bei welchem die Gussmasse zunächst unter Schwerkraft in die Gussform eingefüllt und anschließend auf die Gussmasse Druck ausgeübt wird, erfolgen.

Ferner wird vorgeschlagen, dass mindestens ein radiales Formstück zum Entformen entlang einer, insbesondere durch das Formstück geformten, Stufenkante einer der Ausnehmungen von der geformten Spindel wegbewegt wird. Durch das Wegbewegen des radialen Formstücks entlang einer Stufenkante einer der Ausnehmungen kann die Entformung der Spindel beschädigungslos erfolgen, da durch die Ausnehmung ein Hinterschnitt und ein entsprechendes Hintergreifen des radialen Formstücks und der Spindel vermieden werden.

Weitere Einzelheiten und Vorteile einer erfindungsgemäßen Spindel, eines erfindungsgemäßen Spindelantriebs, einer erfindungsgemäßen Gussform sowie eines erfindungsgemäßen Verfahrens zur Herstellung der Spindel sollen nachfolgend anhand der in den Figuren dargestellten Ausführungsbeispiele der Erfindung exemplarisch erläutert werden. Dahin zeigt:
- Fig. 1: einen Teil eines Türverschlusses mit einem Spindelantrieb in einer Draufsicht,
- Fig. 2: das Teil des Türverschlusses der Fig. 1 in einer perspektivischen Ansicht,
- Fig. 3: eine Detailansicht des Spindelantriebs der Fig. 1 und 2,
- Fig. 4a, 4b: einen Läufer eines Spindelantriebs,
- Fig. 5: eine perspektivische Ansicht einer erfindungsgemäßen Spindel,
- Fig. 6: eine Sicht auf die Spindel der Fig. 5 entlang ihrer Längsachse,
- Fig. 7: eine Detailansicht der Spindel gemäß Fig. 5 und Fig. 6 im Bereich einer Gewinderippe,
- Fig. 8: eine Detailansicht der Spindel gemäß Fig. 7 entlang der Aufnahmerichtung,
- Fig. 9: eine Spindel mit einem alternativ ausgestalteten Läufer,
- Fig. 10: ein Schnitt durch den an der Spindel angeordneten Läufer gemäß Fig. 9,
- Fig. 11: eine perspektivische Ansicht einer geschlossenen Gussform,
- Fig. 12: eine perspektivische Ansicht einer geöffneten Gussform inklusive Spindel,
- Fig. 13: eine perspektivische Ansicht mehrerer Formstücke einer Gussform, und
- Fig. 14: eine Detailansicht des in Fig. 14 markierten Bereichs der Formstücke aus einer anderen Perspektive.

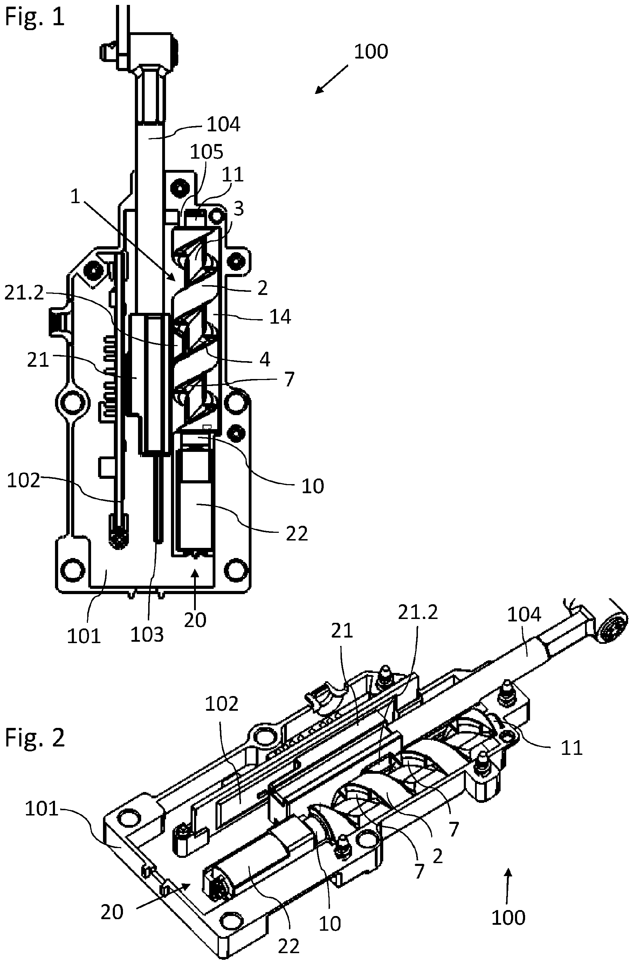

In den Fig. 1 und 2 ist ein Teil eines erfindungsgemäßen Türverschlusses 100 gezeigt, mit welchem es möglich ist, eine Tür zu verriegeln oder zu entriegeln. Bei dem in Fig. 1 und 2 gezeigten Teil dieses Türverschlusses 100 handelt es sich um jenen Teil des Türverschlusses, welcher den nicht gezeigten Schließmechanismus des Türverschlusses 100 zum Verriegeln und Entriegeln bewegt.

In einem Gehäuse 101 ist hierzu ein Spindelantrieb 20 mit einem axial beweglichen Läufer 21 und einer Spindel 1 angeordnet. Der Läufer 21 wird entlang einer Führungsplatte 102 und einer Führungsschiene 103 derart im Gehäuse geführt, dass er sich lediglich entlang einer Achse vor- und zurückbewegen kann. Diese Axialbewegung des Läufers 21 wird über eine an ihm angekoppelte Koppelstange 104 aus dem Gehäuse 101 hinausgeführt und zur Betätigung des Schließmechanismus genutzt. Über die Koppelstange 104 kann der Spindelantrieb 20 den nicht dargestellten Schließmechanismus des Türverschlusses 100 betätigen.

Mit einem Eingreifelement 21.2 greift der nach Art eines Schlittens ausgebildete Läufer 21 in die zu seinem Antrieb dienende Spindel 1 ein. An einem ihrer axialen Enden ist diese Spindel 1 mit einem Lagerdorn 11 in einem Lager 105 des Gehäuses 101 drehbeweglich gelagert. An seinem diametral zum Lagerdorn 11 liegenden axialen Ende weist die Spindel 1 eine Koppelstelle 10 auf, über welche ein Motor als Antriebselement 22 des Spindelantriebs 20 an die Spindel 1 angekoppelt ist. Der als Elektromotor ausgestaltete Motor 22 ist wiederum lagefest im Gehäuse 101 angeordnet, so dass die Spindel 1 um ihre Längsachse L drehbeweglich zwischen dem Lager 105 und dem Motor 22 gelagert ist.

Um den Läufer 21 entlang der durch die Führungsplatte 102 und die Führungsschiene 103 vorgegebenen axialen Richtung zu bewegen, wird die Spindel 1 durch den Motor 22 in Rotation um ihre Längsachse L versetzt. Diese Rotationsbewegung der Spindel 1 bewirkt einen Vorschub des Läufers 21 in axialer Richtung, wobei eine Kraft von der Spindel 1 auf das in sie eingreifende Eingreifelement 21.2 ausgeübt wird.

Damit die Spindel 1 eine Kraft auf den Läufer 21 ausüben kann, weist sie eine um ihren parallel zur Längsachse L verlaufenden Kern 3 gewundene Gewinderippe 2 auf. Diese Gewinderippe 2 weist zwei diametrale Laufflächen 4, 7 auf, welche sich zusammen mit der Gewinderippe 2 um den Kern 3 der Spindel 1 winden. Aufgrund dieses gewundenen Verlaufs ist die zweite Lauffläche 7 dennoch der ersten Lauffläche 4 der vorangegangenen Windung zugewandt. Zwischen den sich derart zugewandten Laufflächen 4, 7 erstreckt sich somit ein von der Gewinderippe 2 begrenzter Gewindegang 14, in welchen das Eingreifelement 21.2 eingreift.

Abhängig von der Rotationsrichtung der Spindel 1 wird nun eine der beiden Laufflächen 4, 7 an das Eingreifelement 21.2 derart heranbewegt, dass sich das Eingreifelement 21.2 von der jeweiligen Lauffläche 4, 7 abdrückt. Da der Läufer 21 lediglich axial beweglich ist und folglich nicht der Rotationsbewegung der Spindel 1 folgen kann, bewirkt dies einen axial gerichteten Vorschub des Läufers 21. Bei dem in Fig. 1 gezeigten Spindelantrieb 20 bewirkt eine vom Motor 22 aus betrachtete Rotationsbewegung der Spindel 1 im Uhrzeigersinn, dass die Lauffläche 7 den Läufer 21 in Richtung des Motors 22 bewegt. Ein entsprechende vom Motor 22 aus betrachtete Rotationsbewegung der Spindel entgegen des Uhrzeigersinns führt dazu, dass der Läufer 21 durch die Lauffläche 4 axial vom Motor 22 wegbewegt wird.

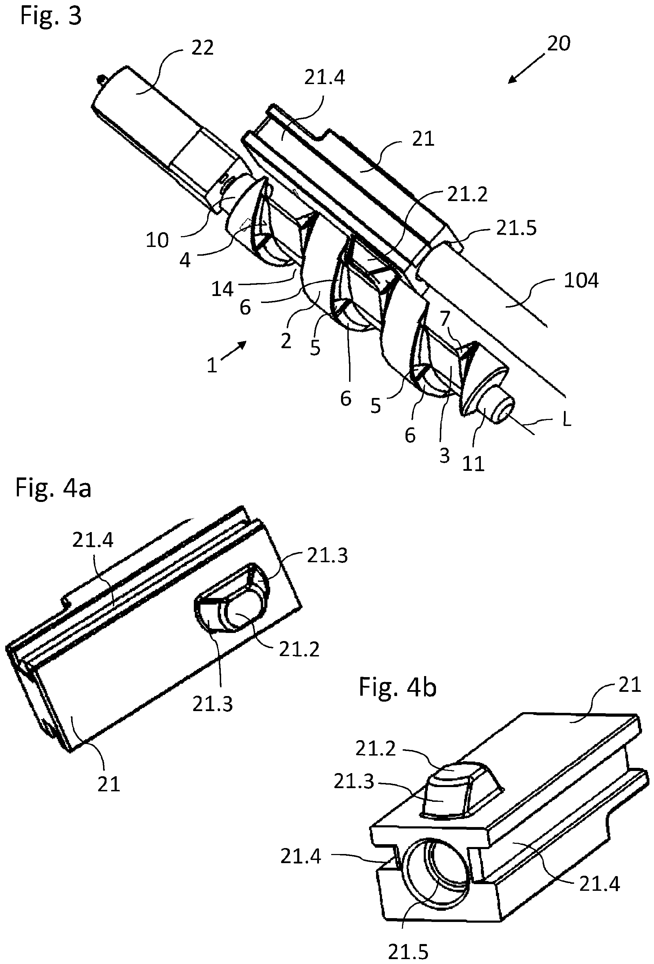

Der Aufbau des Spindelantriebs 20 ist in der Fig. 3 noch einmal detaillierter gezeigt. Neben den bereits im Zusammenhang mit Fig. 1 und 2 beschriebenen Elementen, wie dem Lagerdorn 11, der Koppelstelle 10 und dem Motor 22, sind in dieser Figur auch die Laufflächen 4, 7 der Spindel 1 genauer zu erkennen. Insbesondere ist zu erkennen, dass die Lauffläche 4 der Gewinderippe 2 mehrere Ausnehmungen 5 aufweist, welche im Wesentlichen entlang des Radius der Spindel 1 verlaufen. Diese Ausnehmungen 5 unterteilen die Lauffläche 4 in mehrere Flächensegmente 6. Diese einzelnen Flächensegmente 6 können mit dem Eingreifelement 21.2 des Läufers 21 in Kontakt stehen, um eine den Vorschub bewegende Kraft auf den Läufer 21 auszuüben.

Die einzelnen Ausnehmungen 5 unterbrechen zwar die mit dem Eingreifelement 21.2 in Kontakt stehende Oberfläche der Lauffläche 4, reichen jedoch nicht bis zur diametralen Lauffläche 7. Auf diese Weise ist die Gewinderippe 2 durchgängig ausgebildet, d. h. sie selbst wird durch die Ausnehmungen 5 nicht unterbrochen. Anders als bei einer unterbrochenen Gewinderippe kann das Eingreifelement 21.2 bei der durchgängigen Gewinderippe 2 nicht in eine Unterbrechung der Gewinderippe eintauchen und dort gegebenenfalls verklemmen, was den gesamten Spindelantrieb 20 zumindest zeitweise unbrauchbar machen würde. Die durchgängige Gewinderippe 2 trägt somit zu einem stabileren Betrieb des gesamten Spindelantriebs 20 bei.

Die einzelnen Ausnehmungen 5 der sich um die Längsachse L windenden Lauffläche 4 sind kreissektorförmig ausgebildet, so dass sie im Wesentlichen tortenstückförmig sind.

Der bereits in Fig. 3 detailliert dargestellte Läufer 21 wird zudem auch in den Fig. 4a und 4b aus unterschiedlichen Perspektiven gezeigt. An zwei einander gegenüberliegenden Seiten weist der Läufer 21 dabei jeweils eine Nut 21.4 auf, in welche eine entsprechende Führungsschiene 103 eingreifen kann, so dass die Bewegungsfreiheit des Läufers auf eine lineare Bewegung entlang einer parallel zu den beiden Nuten 21.4 verlaufenden Achse festgelegt wird.

An einer kurzen Stirnseite weist der Läufer 21 zudem eine Aufnahme 21.5 auf, welche die Koppelstange 104, wie in Fig. 3 gezeigt, aufnehmen kann. Damit der Läufer 21 die Koppelstange 104 zur Betätigung des Schließmechanismus nicht nur in eine Richtung schieben, sondern auch in die entgegengesetzte Richtung ziehen kann, kann die Koppelstange 104 in der Aufnahme 21.5 mit dem Läufer 21 verbunden werden. Diese Verbindung der Koppelstange 104 mit dem Läufer 21 kann über ein Einschrauben der Koppelstange 104 in die Aufnahme 21.5 erfolgen. Gleichwohl kann die Koppelstange 104 auch in die Aufnahme 21.5 eingeklebt oder mit dieser verstiftet werden.

Wie in Fig. 4a und Fig. 4b zu erkennen ist, weist der Läufer 21 auf seiner der Spindel 1 zugewandten Seite das vorsprungartige Eingreifelement 21.2 auf. Dieses ist exzentrisch an der Seite des Läufers 21 angeordnet. Die mit den Laufflächen 4, 7 in Kontakt bringbaren Oberflächen 21.3 des Eingreifelements 21.2 weisen einen Anstellwinkel von weniger als 90° zum übrigen Läufer 21 auf, so dass sich eine vom Läufer 21 weg und Richtung Spindel 1 weisende zusammenlaufende Form des Eingreifelements 21.2 ergibt. Der Anstellwinkel des Eingreifelements 21.2 ist dabei auf die Winkel der Flächensegmente 6, 9 entlang der Radialrichtung abgestimmt. Zudem sind diese beiden Oberflächen 21.3 quer zu dieser zusammenlaufenden Richtung konvex gekrümmt. Durch diese Krümmung der beiden Oberflächen 21.3 kann ein besserer Kraftübertrag zwischen den ebenfalls gekrümmten Laufflächen 4, 7 und dem Eingreifelement 21.2 erzielt werden. Der Anstellwinkel ist somit auf den radialen Steigungsverlauf der Flächensegmente 6, 9 abgestimmt.

Die sich zwischen diesen beiden Oberflächen 21.3 erstreckenden Seitenflächen des Eingreifelements 21.2 verlaufen im Wesentlichen rechtwinklig zu der Seite des Läufers 21, an welcher das Eingreifelement 21.2 angeordnet ist. Das Eingreifelement 21.2 weist so die Form eines an zwei Seiten beschnittenen Kegelstumpfes oder eine Noppe auf.

Das Eingreifelement 21.2 ist größer als die Ausnehmungen 5, 8 dimensioniert. Dabei weisen insbesondere die Oberflächen 21.3 Abmessungen auf, welche oberhalb der maximalen umfänglichen Abmessungen der Ausnehmungen 5, 8 liegen. Das Eingreifelement 21.2 kann so nicht gänzlich in die Ausnehmungen 5, 8 eingreifen, sondern steht stets mit mindestens einem Flächensegment 8, 9 der Laufflächen 4, 7 in Kontakt.

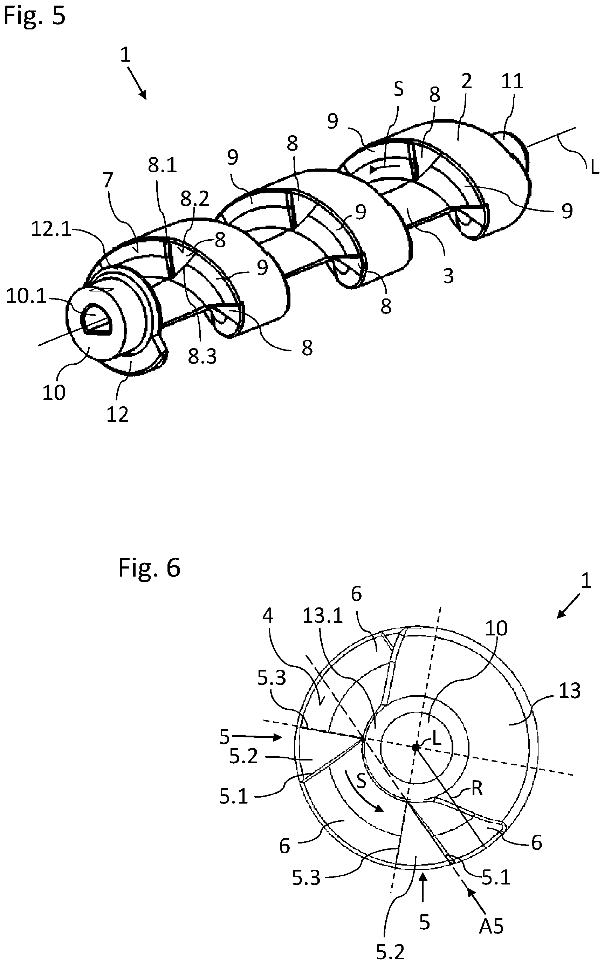

In Fig. 5 ist die Spindel 1 des Spindelantriebs 20 aus einer anderen Perspektive als in Fig. 3 gezeigt. Diese Perspektive ermöglicht in erster Linie einen Blick auf die zweite Lauffläche 7. Auch diese Lauffläche 7 der Gewinderippe 2 weist im Wesentlichen entlang des Radius der Spindel 1 verlaufende Ausnehmungen 8 auf, welche die Lauffläche 7 in einzelne Flächensegmente 9 unterteilen. Die Ausnehmungen 8 sind dabei in einem gleichmäßigen Abstand zueinander entlang der Lauffläche 7 angeordnet.

Die Ausnehmungen 8 sind hierbei stufenförmig ausgebildet und weisen neben einer Stufenkante 8.1 eine Stufenfläche 8.2 auf. Diese Stufenfläche 8.2 erstreckt sich zwischen der Stufenkante 8.1 und einer radial verlaufenden Radialkante 8.3. Diese Radialkante 8.3 stellt hierbei den Übergang von dem Flächensegment 9 auf die Stufenfläche 8.2 dar. Da sich die Steigungen der Gewinderippe 2 in Umfangsrichtung auf den beiden Seiten der Radialkante 8.3 voneinander unterscheiden, weist die Radialkante 8.3 die Form eines Grats auf.

Bei der dargestellten Spindel 1 sind nicht nur die Ausnehmungen 8 der zweiten Lauffläche 7 stufenförmig ausgebildet, sondern auch die Ausnehmungen 5 der ersten Lauffläche 4. Dies ist in Fig. 6 zu erkennen, welche die Spindel 1 aus einer Perspektive entlang der Längsachse L mit Blick auf den Lagerdorn 11 zeigt. Auch diese Ausnehmungen 5 weisen jeweils eine Stufenkante 5.1 sowie eine sich von dieser bis hin zu einer Radialkante 5.3 in Umfangsrichtung erstreckende Stufenfläche 5.2 auf.

Die Ausnehmungen 5 der Lauffläche 4 sind wie in Fig. 6 gezeigt zueinander um im Wesentlichen 90° um die Längsachse L winkelversetzt. Dies ist insbesondere gut an den parallel zum Radius R der Spindel 1 verlaufenden Radialkanten 5.3 der beiden in Fig. 6 gezeigten Ausnehmungen 5 zu erkennen. Auch die Ausnehmungen 8 der zweiten Lauffläche 7 weisen einen solchen Winkelversatz um 90° auf.

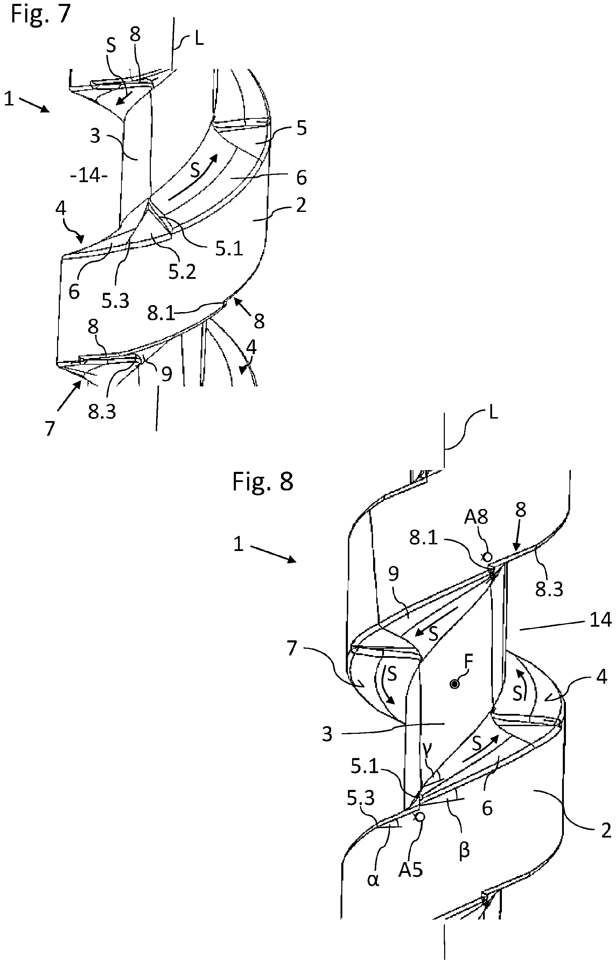

An den beiden voneinander abgewandten Laufflächen 4, 7 sind zwei Ausnehmungen 5 und 8 für die gleiche Windung der Gewinderippe 2 derart entlang der Längsachse L übereinander angeordnet, dass ihre Radialkanten 5.3, 8.3 im Wesentlichen zueinander fluchtend in einer Ebene durch die Längsachse L angeordnet sind. Gleiches gilt auch für die Radialkanten 5.3, 8.3 der einander zugewandten Ausnehmungen 5, 8, zweier aufeinanderfolgender Windungen der Gewinderippe 2, welche den Gewindegang 14 in axialer Richtung entlang der Längsachse L begrenzen. Beides ist in den Fig. 7 und 8 zu erkennen.

Zurückkommend auf die Fig. 5 und 6 sind in diesen die jeweiligen Schubrichtung S der Laufflächen 4, 7 eingezeichnet. Diese Schubrichtung S entspricht jener Richtung, in welcher der Läufer 21 relativ zur Spindel 1 bewegt wird, wenn der Läufer 21 durch die jeweilige Lauffläche 4, 7 angetrieben wird. Da bei dem Spindelantrieb 20 der Läufer 21 nur axial beweglich und die Spindel 1 nur rotationsbeweglich gelagert ist, tritt eine Bewegung des Läufers 21 entlang der Schubrichtung S lediglich aus der Perspektive der rotierenden Spindel 1 gesehen auf. Von außen betrachtet bewirkt die Spindel 1 den axialen Vorschub des Läufers 21 daher nach Art einer archimedischen Schraube.

Entlang der jeweils entgegengesetzt zueinander verlaufenden Schubrichtungen S der Laufflächen 4 und 7 mündet die jeweilige Lauffläche 4, 7 in einem Endbereich 13 bzw. Anfangsbereich 12 der Gewinderippe 2. Anders als die Laufflächen 4, 7 weisen der Anfangsbereich 12 und der Endbereich 13 keine Steigung auf, welche den Läufer 21 in axialer Richtung bewegen würde. Damit das Eingreifelement 21.2 des Läufers nicht über die jeweilige Lauffläche 4, 7 in axialer Richtung entlang der Längsachse L hinausbefördert werden kann, bis das Eingreifelement 21.2 nur noch mit dem Anfangsbereich 12 oder mit dem Endbereich 13 in Kontakt steht, weist der Anfangsbereich 12 und der Endbereich 13 jeweils einen sich vom Kern 3 der Spindel 1 quer zur Längsachse L erstreckenden Flansch 12.1, 13.1 auf. In der Nähe des Anfangsbereichs 12 sowie des Endbereichs 13 beschränkt der Flansch 12.1 bzw. der Flansch 13.1 den Gewindegang 14 dabei zusammen mit der Lauffläche 7 bzw. der Lauffläche 4 derart, dass sich der Gewindegang 14 dort verjüngt. Das sich im Gewindegang 14 bewegende Eingreifelement 21.2 kann sich in diesen verjüngenden Bereichen des Gewindegangs 14 nicht mehr fortbewegen, da seine Abmessung größer als dieser sich verjüngende Bereich ist. Auf diese Weise wird das Eingreifelement 21.2 daran gehindert, den Gewindegang 14 im Anfangsbereich 12 und im Endbereich 13 der Spindel 1 zu verlassen.

Fig. 5 zeigt die Koppelstelle 10 an dem axialen Ende der Spindel 1. Diese Koppelstelle 10 ist nach Art eines Steckverbinders ausgebildet und weist eine Aufnahme 10.1 auf. Entlang der Längsachse L der Spindel 1 kann ein entsprechender Steckverbinder des Motors 22 in diese D-förmige Aufnahme 10.1 eingesteckt werden. Die Koppelstelle 10 ermöglicht auf diese Weise eine einfache Ankopplung des Motors 22 an die Spindel. Die D-förmige Ausgestaltung der Aufnahme 10.1 gestattet zudem eine effektive Übertragung eines Drehmoments vom Motor 22 auf die Spindel 1, ohne dass ein Schlupf auftritt.

In Fig. 6 ist zu erkennen, dass die Stufenkante 5.1 nicht entlang des Radius R der Spindel 1 in Richtung der Längsachse L, sondern vielmehr sekantenartig verläuft. In ihrer Verlängerung schneidet die Stufenkante 5.1 daher nicht die Längsachse L der Spindel 1, sondern verläuft an dieser vorbei. Entlang dieser Stufenkante 5.1 verläuft die Aufnahmerichtung A5 der Ausnehmung 5.

Entlang dieser Aufnahmerichtung A5 kann ein Formstück derart an die Spindel 1 herangeführt werden, dass dieses an einem gesamten entlang der Längsachse L verlaufenden Bereich der Spindel 1 flächig anliegt, ohne dass dabei Hinterschnitte entlang der Aufnahmerichtung A5 zwischen diesem Formstück und der Spindel 1 auftreten. Diese hinterschnittsfreie Aufnahmerichtung A5 wirkt sich insbesondere bei dem untenstehend beschriebenen Fertigungsverfahren der Spindel 1 positiv aus.

Fig. 7 zeigt eine detailliertere Ansicht der Gewinderippe 2 sowie des Gewindegangs 14. Dabei ist zu erkennen, dass sich die Gewinderippe 2 in Radialrichtung nach außen hin verjüngt. Entlang der Längsachse L weist der an den Kern 3 angrenzende Bereich der Gewinderippe 2 dabei eine größere Stärke als der radial außenliegende Bereich der Gewinderippe 2 auf. Folglich fällt die Lauffläche 4 in der in Fig. 7 gezeigten Orientierung nach radial außen hin ab.

In Fig. 7 sind zudem die beiden Laufflächen 4, 7 zu erkennen, welche für die gleiche Windung der Gewinderippe 2 betrachtet die einander gegenüberliegenden und voneinander abgewandten Flächen der Gewinderippe 2 entlang der Längsachse L bilden. Hierbei ist zu erkennen, dass die Radialkanten 5.3, 8.3 der beiden Ausnehmungen 5, 8 auf diesen Laufflächen 4, 7 im Wesentlichen zueinander entlang der Längsachse L fluchtend ausgerichtet sind.

Die Ausnehmungen 5 der ersten Lauffläche 4 verlaufen dabei gegenläufig zu den Ausnehmungen 8 der zweiten Lauffläche. Der Gewinderippe 2 in Umfangsrichtung folgend sind die Ausnehmungen 5 dabei derart ausgerichtet, dass in Umfangsrichtung an ein Flächensegment 6 zunächst die Radialkante 5.3, dann die Stufenfläche 5.2 und schließlich die Stufenkante 5.1 anschließt. An die Stufenkante 5.1 schließt sich dann wiederum ein weiteres Flächensegment 6 an. In gleicher Umfangsrichtung sind die Ausnehmungen 8 der zweiten Lauffläche hingegen derart angeordnet, dass an ein Flächensegment 9 zunächst die Stufenkante 8.1, dann die Stufenfläche 8.2 und schließlich die Radialkante 8.3 anschließt. An die Radialkante 8.3 schließt sich dann wiederum ein weiteres Flächensegment 9 an.

Da zudem die Schubrichtungen S der beiden Laufflächen 4, 7 zueinander entgegengesetzt verlaufen, resultiert diese Gegenläufigkeit der Ausnehmungen 5 und 8 darin, dass diese in Schubrichtung S der jeweiligen Lauffläche 4, 7 gleich verlaufend ausgerichtet sind. Die Spindel 1 kann daher auch um 180° um eine quer zur Längsachse L verlaufende Richtung gedreht zum Einsatz gebracht werden, ohne dass dies zu einer Veränderung des Schubverhaltens des Läufers 21 in eine parallel zur Längsachse L verlaufende Vorschubrichtungen führt. Zudem wird sowohl entlang der Schubrichtung S der Lauffläche 4 als auch entlang der Schubrichtung S der Lauffläche 7 der Läufer 21 in gleicher Art und Weise fortbewegt, da er in diesen Richtungen auf Ausnehmungen 5, 8 gleichen Profils entlang der jeweiligen Schubrichtungen S trifft.

Während entlang der Stufenkanten 5.1, 8.1 kein Hinterschnitt auftritt, hinterschneiden die Ausnehmungen 5, 8 die Lauffläche 4, 7 entlang der jeweilig umfänglich verlaufenden Schubrichtung S. Die Ausnehmungen 5, 8 sind auf diese Weise nach Art eines entlang der Stufenkante 5.1, 8.1 ausgestanzten Bereichs der Lauffläche 4, 7 ausgebildet. Diese Hinterschneidung entlang der Schubrichtung S liegt insbesondere im radial innenliegenden Bereich der Lauffläche 4, 7 vor, da die Lauffläche 4, 7 nach radial innen ansteigt, wie dies in Fig. 7 zu erkennen ist.

In Fig. 8 ist die Spindel 1 im Bereich des Gewindegangs 14 aus einer Blickrichtung parallel zur Aufnahmerichtung A5 der Ausnehmung 5 gezeigt. Entlang dieser Aufnahmerichtung A5 weist die Ausnehmung 5 keinerlei Hinterschnitte auf, so dass ein Formstück derart von der Ausnehmung 5 aufgenommen werden kann, dass dieses hinterschnittsfrei und flächig an der Spindel 1 anliegt. Die Aufnahmerichtung A5 verläuft dabei entlang der Stufenkante 5.1 und damit ebenfalls sekantenartig.

Die der Lauffläche 4 gegenüberliegende Lauffläche 7, mit welcher zusammen die Lauffläche 4 den Gewindegang 14 begrenzt, weist ebenfalls eine Ausnehmung 8 auf, deren Aufnahmerichtung A8 parallel zu der Aufnahmerichtung A5 verläuft. Diese beiden Ausnehmungen 5, 8 sind auf diese Weise einander zugeordnet. Die Aufnahmerichtung A5 und die Aufnahmerichtung A8 liegen auf verschiedenen Seiten der Längsachse L, so dass diese von den beiden Aufnahmerichtungen A5, A8 eingeschlossen wird.

Wie bei der Ausnehmung 5 verläuft auch die Aufnahmerichtung A8 der Ausnehmung 8 parallel zur Stufenkante 8.1. Ebenso ist die Ausnehmung 8 entlang ihrer Aufnahmerichtung A8 hinterschnittsfrei ausgebildet.

Die beiden einander zugeordneten Ausnehmungen 5, 8 sind in Umfangsrichtung der Spindel 1 um im Wesentlichen 90° zueinander winkelversetzt. Wie bereits im Zusammenhang mit Fig. 6 beschrieben, ergibt sich dieser Winkelversatz aus der relativen Lage der Radialkanten 5.3, 8.3 der beiden einander zugeordneten Ausnehmungen 5, 8 in Umfangsrichtung der Spindel 1.

Die beiden einander zugeordneten Ausnehmungen 5, 8 begrenzen auf diese Weise einen umfänglichen Bereich der Spindel 1, welcher sich über die gesamte Länge der Spindel 1 entlang der Längsachse L erstreckt. Dieser umfängliche Bereich erstreckt sich in Umfangsrichtung jeweils von der Radialkante 5.3, 8.3 der Ausnehmung 5, 8 bis hin zu der Radialkante 5.3, 8.3 der in Schubrichtung S folgenden nächsten Ausnehmung 5, 8. Die letztgenannten und nicht zu dem umfänglichen Bereich dieser beiden einander zugeordneten Ausnehmungen 5, 8 gehörigen Ausnehmungen 5, 8 sind zur Verdeutlichung in der Fig. 8 bewusst nicht mit einem Bezugszeichen versehen worden.

Der in Fig. 8 gezeigte Teil des durch die einander zugeordneten Ausnehmungen 5, 8 begrenzten umfänglichen Bereichs der Spindel 1 umfasst daher neben den Ausnehmungen 5, 8 auch jeweils ein Flächensegment 6 der ersten Lauffläche 4 und ein Flächensegment 9 der zweiten Lauffläche 7. Da sich die Gewinderippe 2 mehrfach um die Längsachse L windet, im Ausführungsbeispiel der Fig. 5 beispielsweise dreimal, ähnelt die Spindel nach einer kompletten Windung des Gewindegangs 14 um die Längsachse L wieder dem in Fig. 8 gezeigten Aufbau.

Auf diese Weise begrenzen mehrere, einander paarweise zugeordnete Ausnehmungen 5, 8 den umfänglichen Bereich der Spindel, wobei die einzelnen Ausnehmungen 5 dieser einander zugeordneten Ausnehmungspaare 5, 8 zueinander um 180° in Schubrichtung S zueinander winkelversetzt sind. In gleicher Weise sind auch die einzelnen Ausnehmungen 8 der einander zugeordneten Ausnehmungspaare 5, 8 zueinander in Schubrichtung S um 180° winkelversetzt. Die einzelnen Ausnehmungen 5 der einander zugeordneten Ausnehmungspaare 5, 8 sind somit entlang der Längsachse L fluchtend zueinander angeordnet, was auch für die Ausnehmungen 8 gilt. Diese Anordnung der einander zugeordneten Ausnehmungen 5, 8 ermöglicht es, ein Formstück entlang einer parallel zu den Aufnahmerichtungen A5, A8 verlaufenden Radialrichtung F von der Spindel 1 wegzubewegen, beispielsweise nach einem erfolgten Gießprozess.

In Fig. 8 lässt sich zudem erkennen, dass die Stufenfläche 5.2 eine geringere Steigung α in Schubrichtung S als das Flächensegment 6 aufweist. Die Ausnehmung 5 ist auf diese Weise gegenüber den Flächensegmenten 6 der Lauffläche 4 mehr entlang der Längsachse L in Richtung des Inneren der Gewinderippe 2 versetzt. Da das Eingreifelement 21.2 des Läufers 21 eine größere Abmessung als die maximale Abmessung der Ausnehmung 5 aufweist, gestattet diese Versetzung der Ausnehmung 5 nach gewinderippeinnen ein durchgängiges Gleiten des Läufers 21 über die Flächensegmente 6 entlang der Schubrichtung S. Der über die Lauffläche 4 gleitende Läufer 21 kann dabei stets mit einem der Flächensegmente 6 in Kontakt stehen und bei seiner Bewegung entlang der Schubrichtung S die Ausnehmung 5 überspannen, ohne in diese einzutreten. Für die Ausnehmungen 8 gilt dieses in gleicher Weise.

Die Flächensegmente 6 der Lauffläche 4 weisen radial innenliegend in Schubrichtung S eine größere Steigung γ als die radial außenliegende Steigung ß auf. Zwischen der radial innenliegenden und an den Kern 3 angrenzenden Seite des Flächensegments 6 und der radial außenliegenden Seite des Flächensegments 6 bildet sich daher ein Gradient der entlang der Schubrichtung S verlaufenden Steigung aus. Auf diese Weise windet sich die Lauffläche 4 mit den Flächensegmenten 6 nicht nur in Umfangsrichtung um die Längsachse L, sondern ist auch in sich selbst um die Schubrichtung S verdreht. Für die Flächensegmente 9 der Lauffläche 7 gilt dies in gleicher Weise.

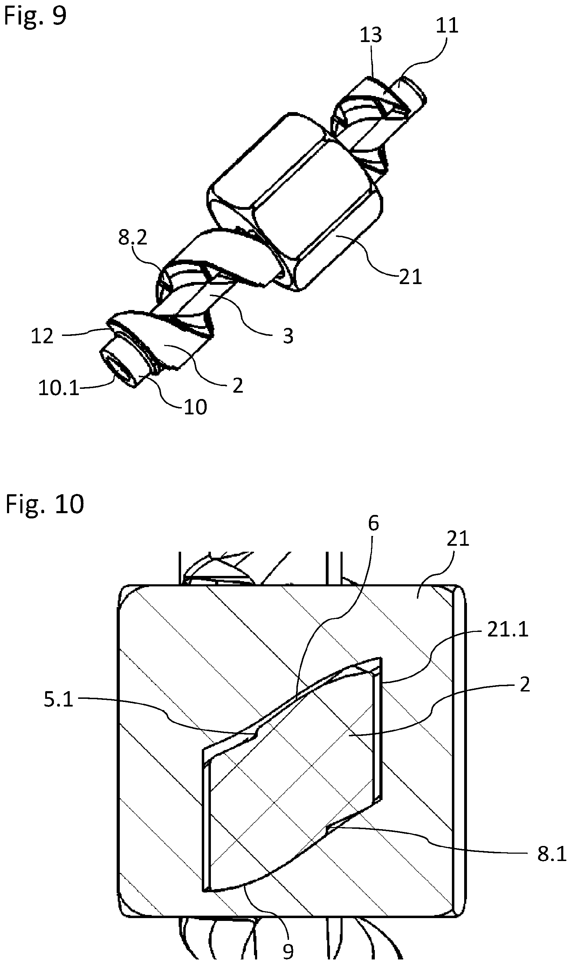

In den Fig. 9 und 10 ist eine alternative Ausgestaltung des Läufers 21 gezeigt. Hierbei ist der Läufer 21 nicht als Schlitten, sondern nach Art einer die Spindel 1 radial umgreifenden Nuss ausgestaltet. Im Inneren weist dieser nussartige Läufer 21 einen helixartigen Kanal 21.1 auf, welcher einen Teilabschnitt der Gewinderippe 2 aufnimmt. Der Läufer 21 ist auf diese Weise nach Art einer Schraubenmutter ausgebildet, welche mit der Spindel 1 wie ein Schraube-Mutter-System zusammenwirken kann.

Dieser Kanal 21.1 ist derart dimensioniert, dass er nicht gleichzeitig mit beiden Laufflächen 4, 7 mit der Gewinderippe 2 in Kontakt steht. Dies ist insbesondere in Fig. 10 zu erkennen, in welcher der anders als die Laufflächen 4, 7 auf seiner Oberfläche keine Ausnehmungen aufweisende Kanal 21.1 flächig an einem Flächensegment 9 der Lauffläche 7 anliegt, während zwischen der gegenüberliegenden Oberfläche des Kanals 21.1 und dem Flächensegment 6 der Lauffläche 4 ein Abstand besteht. Auf diese Weise liegt der Läufer 21 mit der Innenfläche seines Kanals 21.1 nur an einer der Laufflächen 4, 7 an, wodurch die Reibung bei einer Bewegung entlang einer der Schubrichtungen S vermindert wird.

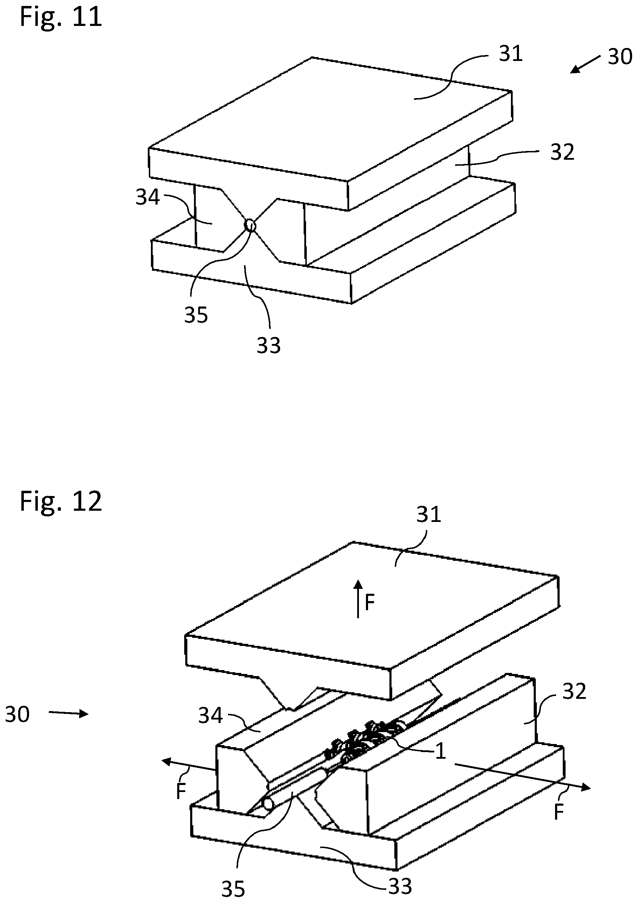

In den Fig. 11 und 12 ist eine Gussform 30, wie sie zur Herstellung der Spindel 1 genutzt werden kann, in ihrem geschlossenen bzw. geöffneten Zustand gezeigt. In ihrem Inneren weist die Gussform 30 in dem in Fig. 11 gezeigten geschlossenen Zustand eine Kavität auf, in welche eine Gussmasse zur Formung eingefüllt wird. Die Kavität entspricht dabei einem Negativ der Spindel 1, so dass in einem Gussschritt die gesamte Spindel 1 inklusive der Ausnehmungen 5, 8 hergestellt werden kann.

In der geschlossenen Gussform 30 härtet die Gussmasse nach ihrem Eingießen solange aus, bis zumindest die Außenfläche der so gegossenen Spindel 1 ausreichend erhärtet ist, dass keine Stabilisierung mehr durch die Gussform 30 erforderlich ist. Ab diesem Zeitpunkt kann die Spindel dann entformt werden.

Da die Gussform 30 aus insgesamt fünf Formstücken 31-35 besteht, kann diese Entformung durch ein lineares Verfahren der Formstücke 31-35 von der gegossenen Spindel 1 weg erfolgen. Beim Entformen werden die Formstücke 31, 32, 34 entlang einer Radialrichtung F der ebenfalls gezeigten aus einem Kunststoff spritzgegossenen Spindel 1 von dieser wegbewegt. Das Formstück 35 wird hingegen entlang einer Axialrichtung parallel zur Längsachse L der Spindel 1 von dieser wegbewegt.

Bei den vier Formstücken 31, 32, 33, 34 handelt es sich dabei um radiale Formstücke, welche den die Gewinderippe 2 inklusive der Ausnehmungen 5, 8 dienenden Bereich der Kavität der Gussform 30 begrenzen. Diese radialen Formstücke 31, 32, 33, 34 formen zudem auch den Kern 3 sowie den Lagerdorn 11 und den umfänglichen Bereich der Koppelstelle 10. Beim Entformen werden die Formstücke 31, 32, 33, 34 dabei entgegen der Aufnahmerichtung A5, A8 mindestens einer der Ausnehmungen 5, 8 von der Spindel 1 wegbewegt. Jedes der radialen Formstücke 31, 32, 33, 34 dient dabei zur Formung mindestens einer der Ausnehmungen 5, 8. Dies ermöglicht, dass jedem radialen Formstück 31, 32, 33, 34 mindestens eine Ausnehmung 5, 8 mit einer Aufnahmerichtung A5, A8 zugeordnet ist. Beim Gießen der Spindel 1 in der geschlossenen Gussform 30 treten so entlang der jeweiligen Aufnahmerichtung A5, A8 keine Hinterschnitte zwischen der Spindel 1 und dem radialen Formstück 31, 32, 33, 34 auf. Die erhärtete Spindel 1 hintergreift in der geschlossenen Gussform 30 somit entlang dieser Aufnahmerichtung A5, A8 nicht das jeweilige radiale Formstück 31, 32, 33, 34, so dass das Formstück entlang einer antiparallel zur Aufnahmerichtung A5, A8 verlaufenden Radialrichtung F zum Entformen von der Spindel 1 wegbewegt werden kann, ohne diese zu beschädigen.

Jedes der gezeigten vier radialen Formstücke 31, 32, 33, 34 bildet einen gleich großen umfänglichen Sektor der Kavität der Gussform 30. Im Bereich der Kavität kann die Gussform 30 so auf symmetrische Weise durch die Formstücke 31, 32, 33, 34 geformt werden.

Jedes der radialen Formstücke 31, 32, 33, 34 weist einen keilförmigen und im geschlossenen Zustand der Gussform 30 nach Gussform innen gerichteten Bereich auf. Mit diesem keilförmigen Bereich liegt das jeweilige radiale Formstück 31, 32, 33, 34 flächig im geschlossenen Zustand der Gussform 30 an den beiden benachbarten Formstücken 31, 32, 33, 34 an, so dass eine in Radialrichtung F geschlossene Kavität gebildet wird. Die radialen Formstücke 31, 32, 33, 34 können sich so zudem gegenseitig abstützen.

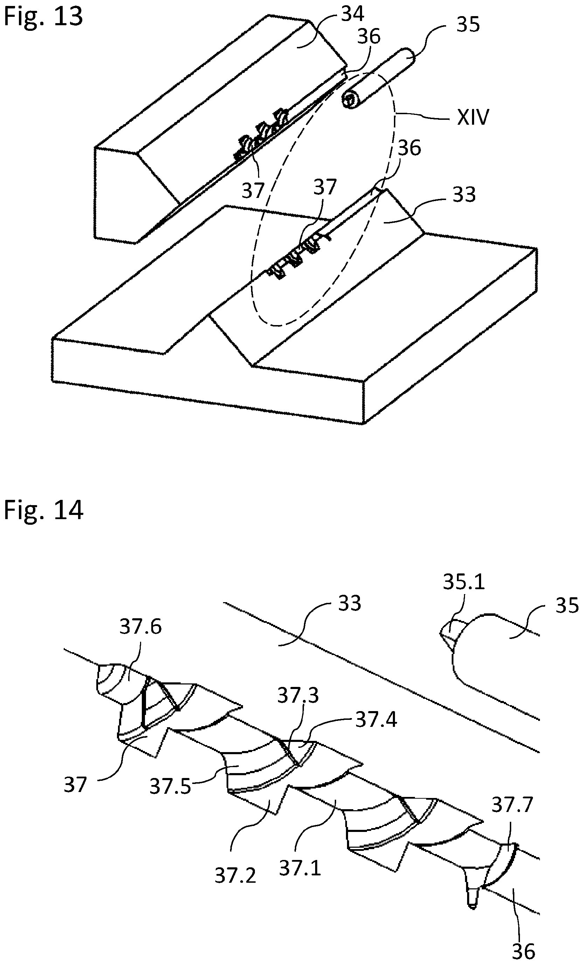

Neben den radialen Formstücken 31, 32, 33, 34 weist die Gussform 30 auch ein axiales Formstück 35 auf. Dieses axiale Formstück 35 dient zur Formung der Koppelstelle 10 und insbesondere der Ausformung der Aufnahme 10.1 der Koppelstelle 10. Wie in Fig. 13 und 14 ersichtlich wird, ist dieses axiale Formstück nach Art eines Stempels ausgebildet, welcher in axialer Richtung die Kavität der Gussform 30 begrenzt. Zu diesem Zweck weist das zylindrische axiale Formstück 35 an einem seiner axialen Enden einen Vorsprung 35.1 auf, dessen Form dem Negativ der Aufnahme 10.1 der Koppelstelle 10 entspricht. Im hier gezeigten Ausführungsbeispiel weist dieser Vorsprung 35.1 daher die Form eines D-förmig beschnittenen Zylinders reduzierten Durchmessers auf.

Um das axiale Formstück 35 zur axialen Begrenzung der Kavität im zusammengesetzten Zustand der Gussform 30 zwischen den radialen Formstücken 31, 32, 33, 34 anordnen zu können, ist jedes der radialen Formstücke 31, 32, 33, 34 mit einer Formstückaufnahme 36 versehen. Diese Formstückaufnahmen 36 sind als zur Form des Formstücks 35 komplementäre Aussparungen ausgestaltet, so dass das Formstück 35 zum axialen Verschließen der Kavität zwischen die bereits aneinander anliegenden radialen Formstücke 31, 32, 33, 34 eingeschoben werden kann.

Wie in Fig. 13 exemplarisch für die beiden radialen Formstücke 33, 34 gezeigt, dient jedes radiale Formstück 31, 32, 33, 34 zur Formung eines umfänglichen Bereichs der Spindel zwischen einer ersten Ausnehmung 5 der ersten Lauffläche 4 und einer ihr zugeordneten zweiten Ausnehmung 8 der zweiten Lauffläche 7, wie dies bereits obenstehend im Zusammenhang mit Fig. 8 erläutert wurde. Zu diesem Zweck weist jedes der radialen Formstücke 31, 32, 33, 34 eine eigene Teilkavität 37 auf, welche mit den Teilkavitäten der übrigen Formstücke 31, 32, 33, 34 zusammenwirkend im zusammengesetzten Zustand der Gussform 30 die Kavität in radialer Richtung bildet.

Bei diesen Teilkavitäten 37 handelt es sich um ausnehmungsartige Profilierungen der nach gussforminnen gewandten Oberfläche der radialen Formstücke 31, 32, 33, 34. Die Details dieser Teilkavität 37 des Formstücks 33 sind in Fig. 14 genauer dargestellt, wobei es sich dabei um eine Ansicht des in Fig. 13 gezeigten Bereichs XIV aus einer anderen Perspektive handelt. Die Teilkavität 37 des Formstücks 33 gleicht im Wesentlichen den Teilkavitäten der übrigen radialen Formstücke 31, 32, 34. Unterschiede der Teilkavitäten 37 können sich dabei auf die zur Formung des Anfangsbereichs 12 und des Endbereichs 13 der Gewinderippe 2 dienenden Bereiche der Teilkavitäten 37 beschränken.

Ein erster Bereich 37.1 der Teilkavität 37 dient der Formung des Kerns 3 der Spindel 1. Dieser Bereich stellt den geringsten Einschnitt in die Oberfläche des Formstücks 33 dar, da der Kern 3 den radial innenliegenden Teil der Spindel 1 bildet. Ein zweiter Bereich 37.2 der Teilkavität 37 dient der Ausformung des umfänglichen Bereichs der Gewinderippe 2 und stellt den tiefsten Einschnitt in die Oberfläche des Formstücks 33 dar.

An den Flanken dieses zweiten Bereichs 37.2 weist die Teilkavität 37 einen in Längsrichtung verlaufenden Bereich 37.3 zur Ausformung der Stufenkante 5.1 sowie jeweils umfänglich verlaufende Bereiche 37.4, 37.5 zur Formung der Stufenfläche 5.2 bzw. zur Formung der Flächensegmente 6 auf. Ebenso weist die Teilkavität 37 Bereiche zur Formung der Stufenkanten 8.1, der Stufenflächen 8.2 und der Flächensegmente 9 der zweiten Lauffläche 7 auf, welche in der Perspektive der Fig. 14 jedoch verdeckt werden.

Der Bereich 37.6 der Teilkavität 37 dient zur Formung eines Teils des Lagerdorns 11 sowie des Endbereichs 13 der Spindel 1 und stellt einen axialen Endbereich der Teilkavität 37 dar. Der diametral zum Endbereich 37.6 gelegene Endbereich 37.7 dient zur Formung des Anfangsbereichs 12 der Gewinderippe 2 und insbesondere zur radialen Formung des Flansches 12.1 und der Koppelstelle 10.

Die vorstehend beschriebene Spindel sowie der Spindelantrieb lassen sich auf einfache und zeitsparende Weise herstellen, wobei insbesondere die Gussform und das beschriebene Verfahren eine vereinfachte Herstellung ermöglichen.

### Bezugszeichen:

- 1: Spindel
- 2: Gewinderippe
- 3: Kern
- 4: Lauffläche
- 5: Ausnehmung
- 5.1: Stufenkante
- 5.2: Stufenfläche
- 5.3: Radialkante
- 6: Flächensegment
- 7: Lauffläche
- 8: Ausnehmung
- 8.1: Stufenkante
- 8.2: Stufenfläche
- 8.3: Radialkante
- 9: Flächensegment
- 10: Koppelstelle
- 10.1: Aufnahme
- 11: Lagerdorn
- 12: Anfangsbereich
- 12.1: Flansch
- 13: Endbereich
- 13.1: Flansch
- 14: Gewindegang
- 20: Spindelantrieb
- 21: Läufer
- 21.1: Kanal
- 21.2: Eingreifelement
- 21.3: Oberfläche
- 21.4: Nut
- 21.5: Aufnahme
- 22: Motor

- 30: Gussform
- 31-34: Formstück
- 35: Formstück
- 35.1: Vorsprung
- 36: Formstückaufnahme
- 37: Teilkavität
- 37.1-37.7: Bereich

- 100: Türverschluss
- 101: Gehäuse
- 102: Führungsplatte
- 103: Führungsschiene
- 104: Koppelstange
- 105: Lager

- A5, A8: Aufnahmerichtung
- F: Radialrichtung
- L: Längsachse
- R: Radius
- S: Schubrichtung

- α: Steigung
- β: Steigung
- γ: Steigung

## Patentansprüche

1. Spindel, insbesondere für einen Spindelantrieb (20), mit einer durchgängigen Gewinderippe (2) mit einer ersten Lauffläche (4) und einer zweiten Lauffläche (7), wobei mindestens eine der Laufflächen (4, 7) der Gewinderippe (2) im Wesentlichen entlang des Radius (R) der Spindel (1) verlaufende Ausnehmungen (5, 8) aufweist, welche die Lauffläche (4, 7) in Flächensegmente (6, 9) unterteilen,
**dadurch gekennzeichnet,**
**dass** die Ausnehmungen (5, 8) stufenförmig mit einer Stufenkante (5.1, 8.1) und einer Stufenfläche (5.2, 8.2) sind.

2. Spindel nach Anspruch 1, **dadurch gekennzeichnet, dass** die Ausnehmungen (5, 8) kreissektorförmig sind.

3. Spindel nach einem der Ansprüche 1 oder 2, **dadurch gekennzeichnet, dass** die Ausnehmungen (5) der ersten Lauffläche (4) gegenläufig zu den Ausnehmungen (8) der zweiten Lauffläche (7) sind.

4. Spindel nach einem der vorhergehenden Ansprüche, **dadurch gekennzeichnet, dass** die Ausnehmungen (5, 8) je eine Aufnahmerichtung (A5, A8) zur hinterschnittsfreien Aufnahme eines in Radialrichtung (F) der Spindel (1) beweglichen Formstücks (31-34) aufweisen.

5. Spindel nach Anspruch 4, **dadurch gekennzeichnet, dass** einer ersten Ausnehmung (5) der ersten Lauffläche (4) mindestens eine zweite Ausnehmung (8) der zweiten Lauffläche (7) zugeordnet ist, deren Aufnahmerichtung (A8) parallel zur Aufnahmerichtung (A5) der ersten Ausnehmung (5) verläuft.

6. Spindel nach Anspruch 5, **dadurch gekennzeichnet, dass** die erste Ausnehmung (5) und die mindestens eine ihr zugeordnete zweite Ausnehmung (8) in Umfangsrichtung der Spindel (1) zueinander, insbesondere um im Wesentlichen 90°, winkelversetzt sind.

7. Spindel nach einem der vorhergehenden Ansprüche, **dadurch gekennzeichnet, dass** die Aufnahmerichtung (A5, A8) entlang der Stufenkante (5.1, 8.1) verläuft.

8. Spindel nach einem der vorhergehenden Ansprüche, **dadurch gekennzeichnet, dass** die Stufenkanten (5.1, 8.1) jeweils sekantenartig verlaufen.

9. Spindel nach einem der vorhergehenden Ansprüche, **dadurch gekennzeichnet, dass** die Ausnehmungen (5, 8) die Lauffläche (4, 7) entlang einer umfänglichen Schubrichtung (S) der Lauffläche (4, 7), insbesondere radial innenliegend, hinterschneiden.

10. Spindelantrieb, insbesondere zur Betätigung eines Schließmechanismus, mit einem axial beweglichen Läufer (21) und einer Spindel (1) zum Antrieb des Läufers (21),
**dadurch gekennzeichnet,**
**dass** die Spindel (1) nach einem der Ansprüche 1 bis 9 ausgebildet ist.

11. Gussform zur Herstellung einer Spindel (1) nach einem der Ansprüche 1 bis 9,
**dadurch gekennzeichnet,**
**dass** mehrere Formstücke (31-35) eine Kavität zur Aufnahme einer Gussmasse bilden, wobei die Kavität der Form der Spindel (1) inklusive der Ausnehmungen (5, 8) entspricht.

12. Gussform nach Anspruch 11, **gekennzeichnet durch**, insbesondere mindestens vier, radiale Formstücke (31-34) zur Formung der Spindel (1) mit der Gewinderippe (2) und den Ausnehmungen (5, 8).

13. Gussform nach Anspruch 12, **dadurch gekennzeichnet, dass** ein radiales Formstück (31-34) derart ausgestaltet ist, dass es zur Formung des umfänglichen Bereichs der Spindel (1) zwischen einer ersten Ausnehmung (5) der ersten Lauffläche (4) und einer ihr zugeordneten zweiten Ausnehmung (8) der zweiten Lauffläche (7) dient.

14. Verfahren zur Herstellung einer Spindel (1) nach einem der Ansprüche 1 bis 9 mit einer Gussform (30) nach einem der Ansprüche 11 bis 13,
**dadurch gekennzeichnet,**
**dass** eine Gussmasse in die geschlossene Gussform (30), insbesondere unter Druck, Schwerkraft oder Schwerkraft mit anschließendem Druck, eingefüllt wird und die Spindel (1) inklusive Ausnehmungen (5, 8) nach dem Erhärten der Gussmasse entformt wird.

## Claims

1. Spindle, in particular for a spindle drive (20), having a continuous threaded rib (2) with a first running surface (4) and a second running surface (7), at least one of the running surfaces (4, 7) of the threaded rib (2) having recesses (5, 8) which run essentially along the radius (R) of the spindle (1) and divide the running surface (4, 7) into surface segments (6, 9), **characterized in**
**that** the recesses (5, 8) are step-shaped with a step edge (5.1, 8.1) and a step surface (5.2, 8.2).

2. Spindle according to claim 1, **characterized in that** the recesses (5, 8) are circular sector-shaped.

3. Spindle according to one of claims 1 or 2, **characterized in that** the recesses (5) of the first running surface (4) are opposite to the recesses (8) of the second running surface (7).

4. Spindle according to one of the preceding claims, **characterized in that** the recesses (5, 8) each have a receiving direction (A5, A8) for receiving a shaped piece (31-34) movable in the radial direction (F) of the spindle (1) without an undercut.

5. Spindle according to claim 4, **characterized in that** a first recess (5) of the first running surface (4) is assigned at least one second recess (8) of the second running surface (7), the receiving direction (A8) of which runs parallel to the receiving direction (A5) of the first recess (5).

6. Spindle according to claim 5, **characterized in that** the first recess (5) and the at least one second recess (8) assigned to it are angularly offset relative to one another in the circumferential direction of the spindle (1), in particular by substantially 90°.

7. Spindle according to one of the preceding claims, **characterized in that** the pick-up direction (A5, A8) runs along the stepped edge (5.1, 8.1).

8. Spindle according to one of the preceding claims, **characterized in that** the step edges (5.1, 8.1) each run like a secant.

9. Spindle according to one of the preceding claims, **characterized in that** the recesses (5, 8) undercut the running surface (4, 7) along a circumferential thrust direction (S) of the running surface (4, 7), in particular radially inwards.

10. Spindle drive, in particular for actuating a closing mechanism, with an axially movable rotor (21) and a spindle (1) for driving the rotor (21), **characterized in**
**that** the spindle (1) is designed according to one of claims 1 to 9.

11. Casting mould for manufacturing a spindle (1) according to one of claims 1 to 9,
**characterized in**
**that** a plurality of shaped pieces (31-35) form a cavity for receiving a casting compound, the cavity corresponding to the shape of the spindle (1) including the recesses (5, 8).

12. Casting mould according to claim 11, **characterized by**, in particular at least four, radial shaped pieces (31-34) for shaping the spindle (1) with the threaded rib (2) and the recesses (5, 8).

13. Casting mould according to claim 12, **characterized in that** a radial shaped piece (31-34) is designed in such a way that it serves to shape the circumferential region of the spindle (1) between a first recess (5) of the first running surface (4) and a second recess (8) of the second running surface (7) assigned to it.

14. Method for manufacturing a spindle (1) according to one of claims 1 to 9 with a casting mould (30) according to one of claims 11 to 13, **characterized in**
**in that** a casting compound is filled into the closed casting mould (30), in particular under pressure, gravity or gravity with subsequent pressure, and the spindle (1) including recesses (5, 8) is demolded after the casting compound has hardened.

## Revendications

1. Broche, notamment pour un entraînement à broche (20), avec une nervure filetée continue (2) avec une première surface de roulement (4) et une deuxième surface de roulement (7), au moins une des surfaces de roulement (4, 7) de la nervure filetée (2) présentant des évidements (5, 8) qui s'étendent essentiellement le long du rayon (R) de la broche (1), qui divisent la surface de roulement (4, 7) en segments de surface (6, 9), **caractérisé en ce que**
les évidements (5, 8) sont de forme étagée avec un bord d'étage (5.1, 8.1) et une surface d'étage (5.2, 8.2).

2. Broche selon la revendication 1, **caractérisée en ce que** les évidements (5, 8) sont en forme de secteur de cercle.

3. Broche selon l'une quelconque des revendications 1 ou 2, **caractérisée en ce que** les évidements (5) de la première surface de roulement (4) sont opposés aux évidements (8) de la deuxième surface de roulement (7).

4. Broche selon l'une quelconque des revendications précédentes, **caractérisée en ce que** les évidements (5, 8) présentent chacun une direction de réception (A5, A8) pour recevoir sans contre-dépouille une pièce de moule (31-34) mobile dans la direction radiale (F) de la broche (1).

5. Broche selon la revendication 4, **caractérisée en ce qu'**à un premier évidement (5) de la première surface de roulement (4) est associé au moins un deuxième évidement (8) de la deuxième surface de roulement (7), dont la direction de réception (A8) s'étend parallèlement à la direction de réception (A5) du premier évidement (5).

6. Broche selon la revendication 5, **caractérisée en ce que** le premier évidement (5) et l'au moins un deuxième évidement (8) qui lui est associé sont décalés angulairement l'un par rapport à l'autre, notamment d'essentiellement 90°, dans la direction périphérique de la broche (1).

7. Broche selon l'une quelconque des revendications précédentes, **caractérisée en ce que** la direction de réception (A5, A8) s'étend le long du bord d'étage (5.1, 8.1).

8. Broche selon l'une quelconque des revendications précédentes, **caractérisée en ce que** les bords d'étage (5.1, 8.1) s'étendent chacun à la manière d'une sécante.

9. Broche selon l'une quelconque des revendications précédentes, **caractérisée en ce que** les évidements (5, 8) contre-dépouillent la surface de roulement (4, 7) le long d'une direction de poussée périphérique (S) de la surface de roulement (4, 7), notamment radialement à l'intérieur.

10. Entraînement à broche, notamment pour l'actionnement d'un mécanisme de fermeture, avec un rotor (21) mobile axialement et une broche (1) pour l'entraînement du rotor (21),
**caractérisé en ce que**
la broche (1) est réalisée selon l'une quelconque des revendications 1 à 9.

11. Moule pour la fabrication d'une broche (1) selon l'une des revendications 1 à 9,
**caractérisé en ce que**
plusieurs pièces de moule (31-35) forment une cavité pour recevoir une masse de coulée, la cavité correspondant à la forme de la broche (1), y compris les évidements (5, 8).

12. Moule selon la revendication 11, **caractérisé par** des pièces de moule radiales (31-34), notamment au moins quatre, pour former la broche (1) avec la nervure filetée (2) et les évidements (5, 8).

13. Moule selon la revendication 12, **caractérisé en ce qu'**une pièce de moule radiale (31-34) est conçue de telle sorte qu'elle sert à former la zone périphérique de la broche (1) entre un premier évidement (5) de la première surface de roulement (4) et un deuxième évidement (8) de la deuxième surface de roulement (7) qui lui est associé.

14. Procédé de fabrication d'une broche (1) selon l'une quelconque des revendications 1 à 9, avec un moule (30) selon l'une quelconque des revendications 11 à 13,
**caractérisé en ce**
**qu'**une masse de coulée est versée dans le moule fermé (30), notamment sous pression, par gravité ou par gravité suivie d'une pression, et la broche (1), y compris les évidements (5, 8), est démoulée après le durcissement de la masse de coulée.
